# EUROPEAN PATENT APPLICATION

(11) **EP 3 945 383 A1**
(43) Date of publication of application: **02.02.2022**
(21) Application number: 20188565.4
(22) Date of filing: 30.07.2020
(51) Int. Cl.: G05B 23/02, B01D 35/02, F02M 21/00

(54) **MANAGEMENT OF A FILTER IN CONTINUOUS FLOW ENGINE**

(71) Applicant: Siemens Energy Global GmbH & Co. KG, 81739 München (DE)
(72) Inventor: Wiesner, Thomas, 96126 Ermershausen (DE)

(57) **Abstract**

The present invention refers to a continuous flow engine monitoring and controlling method improving the filter management and correlated features to improve the overall benefit and possibilities available. Furthermore, the present invention refers to a system being adapted to perform such method. Additionally, the present invention refers to a computer program product being utilized to realize such method. Furthermore, the present invention refers to a use of such means to improve the utilization of such continuous flow engine.

## Description

The present invention refers to a method of controlling a continuous flow engine providing improved monitoring characteristics and capabilities. Furthermore, the present invention refers to a system being adapted to utilize such method. Additionally, the present invention refers to a computer program product adapted to perform such method. Furthermore, the present invention refers to a use of such method, system or computer program product to improve the utilization and maintenance of such continuous flow engine.

Continuous flow engines are well established devices utilized in the industry. Examples are compressors as utilized, for example, in large-scale industrial production processes like refineries or turbines like gas turbines or steam turbines utilized in the energy production. Corresponding devices have been subject to a significant increase in utilization the past. From some experimental possibility many decades ago to the highly reliable and long-lasting device quite difficult to impossible to replace at the current time. While this generic type of engine is available since long time these units are still subject to further developments. Especially, the change from past utilization and monitoring as well as maintenance concepts to modern highly advanced and sophisticated concepts requires a significant change in acquiring and utilizing data in this context. For example, one challenge to be solved is how to switch from the past system of local units being monitored by highly skilled and trained operators to a fleet of distributed units being significantly more automated and being adapted to provide, for example, the possibility of being monitored with regard to a multitude of aspects simultaneously by an operator being no highly experienced expert in each single aspect. Additionally, improvements to increase the overall benefit of continuous flow engines are still required to improve the overall benefit despite the long history and major developments already implemented in the past.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to one aspect the present invention refers to a method of controlling a continuous flow engine,
wherein the method contains the step of evaluating a current state of at least one filter utilized in the continuous flow engine,
wherein the method contains the step of utilizing the current state to determine when a performance loss of the continuous flow engine based on the at least one filter,
wherein the method contains the step of evaluating a benefit of servicing and/or replacing the at least one filter taking into account associated losses. Associated losses in this context do not only refer to the costs associated to such servicing and/or replacement, but also, for example, refer to the downtime of the continues flow engine and/or possible risks arising from further usage of the at least one filter without such service or replacement step.

It was noted that utilizing the inventive method for such purpose is very beneficial for typical applications of continuous flow engines. It was noted that corresponding evaluations of the filter state are typically very problematic for corresponding workers at the corresponding site or an operator of such continuous flow engine. Even in case the current state of the filter can somehow be determined using sensors or the like it is a complicated and labor extensive process to acquire the corresponding data and make corresponding evaluations. Providing the inventive method allow to significantly improve the overall monitoring and utilization of such continuous flow engine. Surprisingly, such option is highly beneficial as corresponding analyses have shown that corresponding filters still represent an underestimated bottleneck of modern continuous flow engines. Corresponding clogging or damages in this context easily reduce the overall performance of such continuous flow engine even possibly resulting in a lack of performance when needed most.

According to another aspect the present invention refers to a system adapted to be utilized in an inventive method comprising a processor and a non-transitory computer readable medium comprising computer executable instructions that when executed by the processor cause the system to perform operations comprising:
receiving data from a sensor directly or indirectly indicating the current state of the at least one filter utilized in a continuous flow engine,
evaluating a current state of at least one filter utilized in the continuous flow engine,
utilizing the current state to determine when a performance loss of the continuous flow engine based on the filter, evaluating a benefit of servicing and/or replacing the filter taking into account associated losses.

According to further aspect the present invention refers to an upgrade kit containing at least the inventive system.

According to another aspect the present invention refers to a computer program product, tangibly embodied in a machine-readable storage medium, including instructions operable to cause a computing entity to execute an inventive method.

According to another aspect the present invention refers to use of an inventive method, an inventive system, or an inventive computer program product to provide data indicating the benefit of servicing and/or placing the filter in the continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a scheme of an industrial plant containing a continuous flow engine being adapted to utilize the inventive method.
Fig. 2 shows a scheme of the inventive method.

Preferably, the embodiments hereafter contains, unless specified otherwise, at least one processor and/or data storage unit to implement the inventive method.

According to one aspect the present invention refers to a method as specified above.

The inventive method is especially beneficial to be utilized for specific continuous flow engines. According to further embodiments it is preferred that the continuous flow engine is a gas turbine, a steam turbine or a compressor, more preferred a gas turbine or a compressor, even more preferred a gas turbine. Corresponding continuous flow engines benefit the most from such filter monitoring. Herein, the high complexity of such system is combined with the detailed experience regarding such engines allowing to provide significant benefits when utilizing the inventive method.

Furthermore, it was noted that specific applications typically benefit significantly more from the inventive method. According to further embodiments it is preferred that at least one of the at least one filter is located in an air intake system, a fuel supply stream and/or a hydraulic liquid stream, more preferred an air intake system. It was noted that the improved monitoring of such filters is especially beneficial for continuous flow engines. Surprisingly, it is possible to deduct much information of further parts of such continuous flow engine not being directly connected to such filter. It was noted that the inventive system can be especially usefully utilized to monitor the air intake being utilized in, for example, a compressor and/or a compressor part of a gas turbine, especially a compressor part of a gas turbine. The advanced monitoring and improved exchange enabled herewith allows to significantly decrease the compressor fouling in the first stages of such compressor or compressor part. Furthermore, performing a longterm monitoring of such filter and utilizing, for example, historic data allows to detect deviations from the normal behavior or life time in interrelated parts like burners of gas turbines or blades and vanes located in a compressor or gas turbine.

The inventive method can furthermore be utilized to provide an easy to understand indicator significantly simplifying the utilization. According to further embodiments it is preferred that the benefit of servicing and/or replacing the at least one filter it utilized to create a maintenance indicator. Such maintenance indicator, for example, represents such benefit by means of a single numerical value or a color scheme. An example of such scheme utilizes an ample system. Herein, the filter state is automatically evaluated utilizing a processing unit based on a predefined scheme. Such scheme can preferably also be updated on a regular basis or is adapted to request updates automatically from a local or distributed database, preferably a distributed database. The form of the evaluation can be provided as desired by the operator. For example, it can be provided as an ample system indicating that no action is required by green, an action like maintenance might be soon to be expected by yellow and an immediate action is required by red. Also, such evaluation can take the form of a numerical value indicating the current state by, for example, varying between two fixed limits like 0 and 10. Herein, 0 represents a normal function without any restriction. On the other hand, 10 indicates a loss of functioning of such filter or expected damage or function loss of other components of the continuous flow engine.

Herein, such easy to understand maintenance indicator can be combined with a scheduling action. According to further embodiments it is preferred that the maintenance indicator is continuously updated during a scheduling action, wherein the scheduling action refers to a scheduling of a planned maintenance. Typically, it is preferred that the maintenance indicators of at least three, more preferred at least seven, even more preferred at least twelve, filters are shown simultaneously. This allows to significantly improve, for example, checking whether the next maintenance might be postponed for a bit as it allows to allow an immediate overview over a plurality of filters and whether postponing such maintenance might result in an intermediate action being necessary for such filter. Also, it allows to quickly check whether it might be reasonable to speed up the next maintenance to reduce the risk of required action upfront or even avoid potential problems based on the planning.

According to further embodiments it is preferred that multiple types of maintenance indicator are utilized for the same filter. For example, such ample system can be utilized for some overview of a plurality of filters being monitored by the operator at the same time. However, the system furthermore provides the possibility to request a more detailed evaluation providing, for example, a numerical maintenance value of selected filters. According to further embodiments it is preferred that method contains providing at least two maintenance indicators for the same filter of the at least one filter, wherein the at least two maintenance indicators include at least one graphical maintenance indicator and at least one numerical maintenance indicator. Preferably, the system also allows to provide a graphical development of such numerical value over time to easily allow to evaluate whether the development of the state of the filter is typical or not. Herein, specific types of maintenance indicator are noted to be typically especially useful to be utilized for continuous flow engines like gas turbines and compressors. According to further embodiments it is preferred that the benefit of servicing and/or replacing the at least one filter it utilized to create a maintenance indicator,
wherein the maintenance indicator is a numerical value, wherein the method contains a step of monitoring the change of the numerical value over time,
wherein the method contains a step of triggering a security action in case the change of the numerical value over time deviates from an expected behavior. It was noted that additional information can be acquired besides, for example, data being relevant for maintenance scheduling and the like. Surprisingly, monitoring such filter even allows to provide security measures as fallback evaluation system to detect someone tampering with the system. Herein, corresponding faked data fed into the system can be identified by noting a behavior of the filter deviating from the expected behavior. For example, such system can be based on identifying tampering with the data of the filter itself being identified by the jump in such maintenance indicator being not explainable. However, additionally or alternatively it can be especially utilized to identify an inhomogeneous development inside the continuous flow engine. As the data of filter as referenced above allows to deduct the state of different parts of the continuous flow engine during normal utilization of the continuous flow engine it is possible to detect incorrect correlations occurring in such system based on such simple filter data. This is especially useful as such filter is typically not in the focus of the corresponding third-party trying to manipulate the complete system. Also, it is surprisingly difficult to falsify corresponding data without very deep insight in the very specific continuous flow engine. Therefore, even some insider with good knowledge of the system typically has no chance to tamper with the system in such depth to prevent such security measure to trigger and indicate a tampering.

It was noted that specific feedbacks that are possible to provide utilizing the inventive method are typically considered to be especially useful to improve the overall utilization of such continuous flow engine. According to further embodiments it is preferred that the method contains the step of providing a feedback to an operator of the continuous flow engine, wherein the feedback contains data with regard to the benefit of replacing the at least one filter at the specific time. While currently monitoring systems containing such an continuous flow engine are often monitored by local experts being well accustomed to the corresponding engine it is expected that in the future a more central control or at least additional control by an operator being located remotely with less experience in such engine will be demanded. Typically, it is preferred that the method contains such automatic provision of data regarding the benefit of replacing the filter at a specific time. Especially, when maintenance scheduling will be centralized such system provides a significantly simplified handling by an operator. Such benefit is not only relevant for operators being less accustomed to the specific system, but also for operators being confronted with a higher sophisticated software being required in the future to make best use of the continuous flow engine and provide the flexibility demanded in the future.

A further possibility provided by the inventive method is to provide a simplified scheduling system by providing a possibility of a specified output upon request. According to further embodiments it is preferred that the method contains the step of sending a request to a computer program product utilized to execute the method,
wherein the request optionally contains a specified time and/or a specified performance,
wherein the method contains the step of sending a feedback to an operator of the continuous flow engine containing data with regard to the benefit of servicing and/or replacing the at least one filter, wherein the data optionally takes into account the specified time and/or the specified performance. Providing such possibility is especially useful for many applications cases. For example, the operator may check whether a corresponding peak of performance can be handled without any problem whether it makes sense to first plan some replacement step of the at least one filter to secure that the corresponding performance can be reached at a specific time interval. Additionally or alternatively the operator may request an evaluation whether it makes sense to utilize some planned outage to also replace said at least one filter.

The inventive method can be further utilized to simultaneously monitor multiple filters. According to further embodiments it is preferred that the current state of at least three, even more preferred at least five, filters is determined. Typically, it is preferred that a corresponding evaluation with regard to the benefit of servicing and/or replacing the filter is provided for the aforementioned different filters. Such system can be integrated into multiple parts of the continuous flow engine allowing to, for example, request a corresponding evaluation as single request by an operator to get an overview whether a maintenance step might be planned or not. Surprisingly, it was noted that such filter being a very simple component of the continuous flow engine allows to provide a very beneficial feedback to an operator trying to gain an understanding of the state of the continuous flow engine. It was noted that the corresponding information gives a very surprising insight in the real utilization of such continuous flow engine for the person skilled in the art. Such skilled person is able to gain an understanding of the current state as well as what to expect based on refined data based on, for example, a defined mixture of real data and theoretical data being, for example, based on the runtime since the last maintenance leading to a significantly improved handling and security.

While there are different possibilities to determine the current state of a filter it was noted that for typical application in the context of continuous flow engines is typically preferred for applications like gas turbines and compressors to utilize a sensor and its collected data regarding the filter. This is surprisingly typically true even in case of such highly predictable system allowing to deduct the current state also theoretically. According to further embodiments it is preferred that the method utilizes at least one sensor adapted to monitor the current state of the at least one filter. Herein, such sensor can collect data for deducting the current state of the at least one filter directly or indirectly. Typically, it is preferred that such sensor collects the corresponding data indirectly, for example, utilizing the pressure drop before and after the filter to deduct the current state of the filter. However, it was noted that for specific applications it is beneficial to utilize more sophisticated approaches like a sensor being integrated into the filter itself measuring the strain on the filter by means of its deformation allowing to detect the current state of the filter taking into account the pressure applied onto the filter at this moment. The correlation of the deformation in such situation with the known pressure of the fluid flowing through the filter allows to determine how much of the filter is clogged, thus, increasing the resistance against the fluid trying to flow through the filter.

For typical applications it is preferred to directly utilize a sensor to monitor the at least one filter. According to further embodiments it is preferred that the method utilizes at least one sensor being adapted to monitor the current state of the at least one filter, wherein the sensor is adapted to actively monitor the state of the at least one filter. This is especially beneficial in very sensitive applications, such active filter monitor system allows to constantly monitor the behavior of the filter and correlate it, for example, to the pressure of the fluid stream through said filter. Herein, even minor damages of the filter can be identified based on corresponding sensor data. Like some minor part of the filter breaking apart, wherein such event results in some small opening. Corresponding damages can be relatively harmless without an immediate impact on the continuous flow engine. However, on midterm or long-term they can easily result in further damages based on, for example, existing openings ripping apart even more in creating bigger openings. Also, further parts breaking off can be moved downstream in a security filter protecting the engines, wherein such broken off parts of the filter pose a significant threat to such security measures. Therefore, such data can be especially usefully utilized for the inventive method to indicate the safety for can benefit of an early service and/or replacement step of the corresponding filter.

Furthermore, it was noted that for typical applications it is beneficial to utilize a historic database. According to further embodiments it is preferred that the method contains the step of retrieving data from a historic database,
wherein the historic database contains data regarding different states of a filter to be evaluated and/or a filter being comparable to the filter to be evaluated and associated performances of a continuous flow engine, wherein the step of determining the performance loss of the continuous flow engine and/or the step of evaluating the benefit of servicing and/or replacing the at least one filter at least takes into account the data retrieved from the historic database. Utilizing corresponding historic data allows to, for example, gain additional verification or even completely base an evaluation of the current state onto a comparison of acquired data with a corresponding state as stored in such historic database. Also, it can be utilized to compare prior utilization to evaluate whether the development of the filter is as expected. Detecting corresponding deviations from the expected development is a surprisingly helpful indicator to detect problems in an early stage.

For many applications it is preferred to utilize past data of the at least one filter. According to further embodiments it is preferred that that the historic database contains historic datasets regarding a filter to be reviewed, wherein a historic dataset to be utilized to evaluate the benefit of servicing and/or replacing the at least one filter is selected based on at least one comparison measurement value associated to the corresponding filter and determined along the data utilized to determine the current state, wherein the selected historic dataset provides a comparison measurement value within a specified past time period deviating less than specified comparison measurement value limit. For example, such comparison measurement value can be a pressure drop or a pressure of a fluid flowing through the corresponding filter. For many applications it is preferred to utilize at least two comparison measurement values like a combination of at least a pressure drop and a pressure of a fluid flowing through the at least one filter. Such combination is typically very useful to identify comparable historic datasets to be utilized for evaluating the current state of the at least one filter. The past time period can provide a lower and/or an upper limit. Preferably, such time period provides a lower and an upper limit. For example, such time period can be at least 7 days in the past and at most 100 days in the past.

The inventive method is able to furthermore make good use of data regarding the component that can be retrieved from a corresponding database. According to further embodiments it is preferred that the method contains the step of retrieving data from a component database,
wherein the component database contains filter data,
wherein the filter data contains data regarding technical characteristics and/or commercial characteristics, preferably commercial characteristics, of the at least one filter, wherein the filter data is utilized to evaluate the benefit of servicing and/or replacing the at least one filter. It was noted that such apparently trivial information can be technically highly important. Corresponding availabilities differ to a certain degree and can become completely unreliable during times of crisis like, for example, Corona leading to problems of transportations and the like. Surprising spikes in the development of the prices indicate problems like insufficient amounts of filters on the market or quality problems of certain suppliers resulting in technical problems. For example, delivery times extend and original planned maintenance has to be performed without filter change. Thus, even utilizing commercial characteristics can be utilized to acquire technical relevant data. Technical characteristics can be utilized too. For example, corresponding updates and changes of the characteristics of a supplier can become highly relevant to reevaluate the former planning and eventually reschedule a maintenance.

Also, the inventive method allows to make best use of collected data referring to the state of the filter. According to further embodiments it is preferred that the method contains the step of retrieving data from a historic database, wherein the historic database contains data with regard to different states of a filter as to be evaluated and/or a filter being comparable to the filter to be evaluated and at least one correlated characteristic of a continuous flow engine, wherein the method contains the step of acquiring data with regard to the current state of the at least one filter and at least one correlated characteristic of a continuous flow engine, wherein the acquired data of the current state of the filter and the at least one correlated characteristic of a continuous flow engine are compared to corresponding data contained in the historic database, wherein in case the data of the at least one correlated characteristic of a continuous flow engine does not meet the expected data based on the data contained in the historic database taking into account the correlated data with regard to the current state of the filter an action is triggered. Such action can be, for example, requesting assistance from the operator to identify the reason for the deviation, sending a notification to the operator, triggering a security alert based on an alleged tampering with the system, requesting information from an service provider, and so on. For example, such requested information can be referring to the repair and service steps taken recently explaining the deviations from the expected behavior. This prevents, for example, that the component is labeled being subject to a service step by the system while such service has already been performed without notifying the system.

A further data source that can be typically beneficially utilized according to the present invention is the determination of the current state of the at least one filter utilizing a virtual model of at least a part of the continuous flow engine containing the at least one filter,
wherein data of the prior use of the continuous flow engine is utilized to predict the current state of the at least one filter. Utilizing such simulation models based on the utilization of the continuous flow engine allows to further improve the available data and double check whether the current evaluation of the filter state is satisfying. For example, it is possible to additionally simulate further measurement values of the system like a fuel system utilizing the filter and compare these simulated values to the measured ones to indirectly verify the current state of the filter.

A further possibility to determine the current state of the filter utilizes collected data. According to further embodiments it is preferred that the determination of the current state of the at least one filter utilizes data contained in a historic database, wherein the method contains the step of retrieving data from the historic database for evaluation into current state of the at least one filter contained in the specific continuous flow engine. Herein, such historic database does not necessarily have to be a local database. In fact, it is typically preferred to utilize a distributed database containing a plurality of data sets of such or at least comparable continuous flow engines. Herein, a corresponding dataset being suited for the current situation can be retrieved and, for example, be further verified by comparing additional characteristics contained in said dataset with the corresponding characteristics of the real continuous flow engine available. As the benefit of corresponding historic data significantly depends on the availability of fitting datasets utilizing such distributed database is surprisingly beneficial. Especially, it allows to utilize the huge amount of data and experience collected by the providers of corresponding continuous flow engines providing a corresponding distributed database to optimize the evaluation of such continuous flow engine.

To provide additional evaluations and features utilizing the inventive method it is preferred for typical applications to collect data regarding the current state of the filter over time. According to further embodiments it is preferred that the method contains the step of collecting a plurality of current states of the at least one filter over a period of at least three days, more preferred at least ten days, even more preferred at least 30 days, wherein the collected plurality of current states is utilized to monitor the at least one filter. For example, it can be utilized to monitor the wearout of the at least one filter to improve the prediction of its lifetime. Additionally, it allows to identify deviations from the normal utilization early-stage resulting from a plurality of possible reasons. For example, it was noted that lower quality fuel might be utilized for a continuous flow engine resulting in an overall increased wearout of the continuous flow engine. Such process can be identified in a very early stage based on such information with regard to the filter showing a decrease in its lifetime or service interval significantly above the normally expected degree. This can, for example, utilized to automatically inform the operator and/or a service provider tasked with servicing such continuous flow engine allowing to early-stage adapt the corresponding strategy. It also allows to, for example, switch back to a higher quality fuel or additional steps like implementing an additional filter unit or comparable means to improve the quality of the fuel in case the simulations result in the information that utilizing such "cheaper" fuel end up costing more money based on the more extensive or earlier maintenance to be done.

Furthermore, the inventive method can be utilized to automatically generate a suggestion to support an operator. According to further embodiments it is preferred that the method contains the step of providing a suggestion of a change of a filter type of the at least one filter based on the current state, based on the current state and historic data, based on the current state and simulation of the wearout of the at least one filter, and/or a plurality of current states of the at least one filter collected over a period of time. For example, such period of time can be at least three days, more preferred at least ten days, even more preferred at least 30 days. It was noted that long term monitoring provides significant benefits based on the possibilities provided herewith.

According to further embodiments method contains collecting current states for different periods of time, wherein at least one dataset collected over a shorter period of time is compared to a dataset collected over a longer period of time. Typically, it is preferred that the longer period of time is at least five times, even more preferred at least ten times, more preferred at least 20 times, the length of the shorter period of time.

This allows to, for example, easily compare these datasets allowing to identify an abnormal deviation from the expected behavior. While it was noted that such change of the state of the at least one filter typically is not linear, it was observed that the change follows certain rules and proportions allowing to identify corresponding deviations by comparing the available difference between the shorter time period state change and the longer period state change of the at least one filter to the expected one being laid down, for example, in a database being connected to the system utilized for the method or simply being derived from earlier observations resulting in an correlation being specifically applicable to the specific system being present.

Surprisingly, it even becomes possible utilizing the inventive method to provide suggestion with regard to changes of the existing device. According to further embodiments it is preferred that the method contains the step of suggesting a change of the at least one filter to a different filter type based on the data collected. For example, such suggestion can be based on problems observed like a quick clogging of such filter resulting in a maintenance becoming reasonable long before a significant amount of other components of the continuous flow engine become subject to a service step. Herein, it might be suggested to simply change the type of the filter, but it might also provide suggestions to even modify the existing system to include a filter cascade, a bypass line including such filter to allow to switch to a different filter while servicing the other one without having to shut down the whole continuous flow engine, or the like.

According to a further aspect the present invention refers to a system adapted to be utilized in an inventive method comprising a processor and a non-transitory computer readable medium comprising computer executable instructions that when executed by the processor cause the system to perform operations comprising:
receiving data from a sensor directly or indirectly indicating the current state of the at least one filter utilized in a continuous flow engine,
evaluating a current state of at least one filter utilized in the continuous flow engine,
utilizing the current state to determine when a performance loss of the continuous flow engine based on the filter, evaluating a benefit of servicing and/or replacing the filter taking into account associated losses.

According to further aspect the present invention refers to a upgrade kit containing at least the inventive system. Such upgrade kit is especially useful to upgrade existing industrial plants and continuous flow engines. Surprisingly, it was noted that the inventive system can be adapted to automatically establish corresponding connections as well as retrieve data what data is available in the data infrastructure of such industrial plant. In case the corresponding rights are granted it is further possible to automatically retrieve updates from remote databases provided, for example, by the manufacturer of the continuous flow engines or the like to also improve the first settings of the system based on the specific local requirements and eventualities.

Typically, it is preferred that such upgrade kit is adapted to automatically communicate with field personal tasked with implementing such upgrade. Surprisingly, it is possible to automatically provide, for example, field personal with a list of deficiencies with regard to the sensor data, connection problems, or the like forwarding clear instructions what is required to optimize the benefit of the upgrade kit.

In most cases it is preferred that such upgrade kit furthermore contains a historic database and simulation unit specifically adapted to execute the inventive method without requiring further processing power of the local industrial plant. While it is expected that future and state-of-the-art industrial plants utilizing a continuous flow engine provide corresponding databases and processes enabling simply re-assigning corresponding processing power and data storage, it was noted that introducing such thing into an upgrade kit provides a significant benefit to provide such possibility to the majority of existing industrial plants.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to a use of an inventive method, an inventive system, or an inventive computer program product to provide data indicating the benefit of servicing and/or placing the filter in the continuous flow engine.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

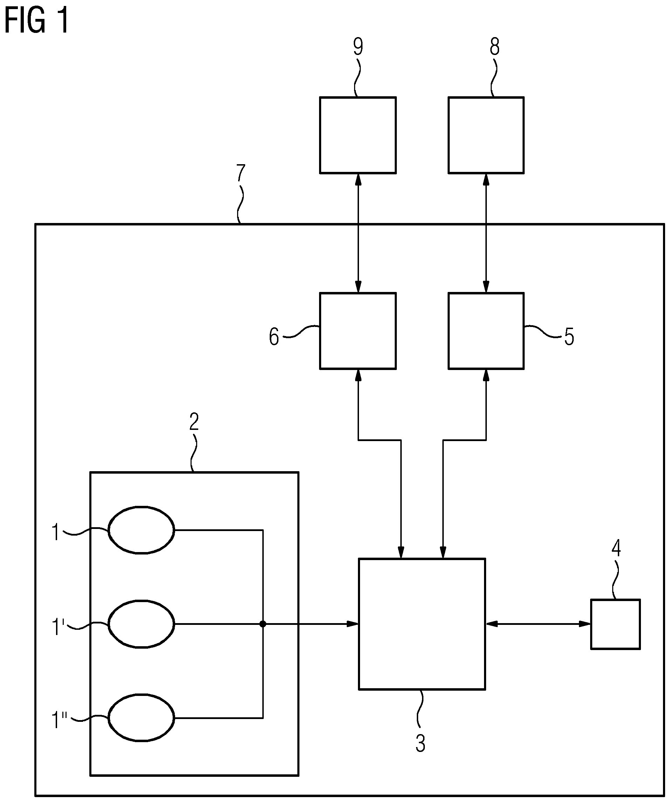

Figure 1 shows a scheme of an industrial plant 7 containing a continuous flow engine 2 being a gas turbine being adapted to utilize the inventive method. Herein, the current state of the filters 1, 1', 1'' is evaluated. Based on the evaluation the performance loss originating from it is determined to evaluate in the next step the benefit of servicing and/or replacing at least one filter 1, 1', 1". This information can be utilized to, for example, optimize the maintenance strategy and improve the overall benefit of the continuous flow engine.

In the case as shown in figure 1 the filters 1, 1', 1'' are located in the air intake and the fuel supply stream. Herein, two filters 1, 1', 1'' are located in the air intake requiring a reliable filtering and benefitting especially from the inventive method.

The data acquired is utilized by system 3 to create multiple maintenance indicators summarizing the current state of each filters 1, 1', 1'' in an easy to understand manner. This task is performed by a computer program product stored and executed on said system 3. Herein, one maintenance indicator is a signal like an ample signal relying on a limited number of colors namely yellow, green and red to provide a generic evaluation of the state of the filters 1, 1', 1". Green represents a normal state with no to low amount of performance being impaired. No further action is expected until the next scheduled maintenance action on the filter 1, 1', 1", wherein the corresponding data with regard to the next planned maintenance action is retrieved from a local database. A further maintenance indicator is provided as numerical value indicating the current state by its number. In the specific case shown the number ranges from 0 to 10, wherein 0 represents a perfect state and 10 represents a critical state significantly impairing the performance and providing the risk of failure. The corresponding number can be reviewed by an operator easily by clicking on the corresponding color schemed maintenance indicator as shown on an user interface 4. Furthermore, the numerical maintenance indicator is stored in a database to be utilized for additional evaluations. Herein, the change of the numerical maintenance indicator over time is monitored, wherein a deviation from the expected value exceeding a predefined value triggers an alarm action.

The expected value of the numerical maintenance indicator is based on historic data and simulated data. Said datasets are retrieved from a historic database 5 and a simulation unit 6. The datasets of both sources are utilized simultaneously, wherein the historic data is typically preferred for evaluation. Depending on the situation, for example, in case the situation of the historic dataset deviates from the current situation the simulated data is utilized to either check the applicability of the historic data or to replace the current data.

The historic database 5 is connected to a historic remote database 8 storing a significantly higher number of historic data for evaluation. The historic remote database in case of the example shown is provided by a third party being responsible for maintenance. Depending on deviations, for example, based on a different utilization of the continuous flow engine like changing from a baseload engine to an engine utilized to compensate for fluctuations in an energy grid resulting from a significant amount of renewable energy being fed into the system. A further example is after exchanging components of the continuous flow engine resulting in a changed behavior. In such cases the historic database 5 can utilize the connection to retrieve corresponding new historic data from the historic remote database 8. This makes best use of the extensive amount of data collected by the third party providing maintenance and preferably also producing corresponding continuous flow engines making it easy to identify very suitable and reliable data from such data storage.

The simulation unit 6 on the other hand is configured to regularly retrieve updates of the models utilized in the simulation unit 6. Said models are provided by the simulation remote database 9 being located remotely at the site of the third party being responsible for maintenance. This allows to significantly improve the simulations as said models can be continuously improved and updated based on the latest experiences collected. Furthermore, providing such updates of the utilized models centrally allows to invest a significantly higher amount of effort in such task as the corresponding improvement can be rolled out to a multitude of customers each benefiting from such update.

Besides the maintenance indicators the output to the operator furthermore contains details with regard to the benefit of replacing the at least one at a specific time. Such information is forwarded on a regular basis as well as can be requested by the operator. Furthermore, it is possible to specify a time for maintenance intended or performance to be provided in the near future, wherein an output is generated containing the benefit of servicing and/or replacing the at least one filter 1, 1', 1".

In addition to the sensor data utilized to determine the current state of the at least one filter 1, 1', 1" the current state is simulated by means of a model of the filter 1, 1', 1" taking into account the utilization of the continuous flow engine. This data can be beneficially utilized to detect deviations from the expected behavior, unexpected clogging, sensor failures and the like.

A further option utilized to monitor the filter 1, 1', 1" utilizes the collected current states of the at least one filter 1, 1', 1" of at least 10 days. Herein, the development of the current state is monitored and whether some unexpected deviation occurs. For example, it was noted that values providing a significant change without an external reason provides an indication of a sensor providing incorrect data or a filter 1, 1', 1" starting to be damaged. Comparing such observations with, for example, a simulated development of such filter 1, 1', 1" surprisingly allows to identify the specific error or problem by comparing the real behavior with different simulations. This allows to reliably identify even unknown problems with a high accuracy.

Furthermore, the system as shown in figure 1 is able to provide active suggestions to improve the existing system. Especially, utilizing the connection to the historic remote database 8 and the simulation remote database 9 allows to compare the current state of the at least one filter 1, 1', 1" and the intended future use. In this context, it can be identified whether it makes sense to, for example, replace the current filter 1, 1', 1" by a different filter type to adapt the continuous flow engine for a change of the use and resulting strain on its components. Herein, the collected experience of the remote databases can be utilized to provide a simple suggestion for what the present filter 1, 1', 1" should be replaced and what benefit can be obtained herewith.

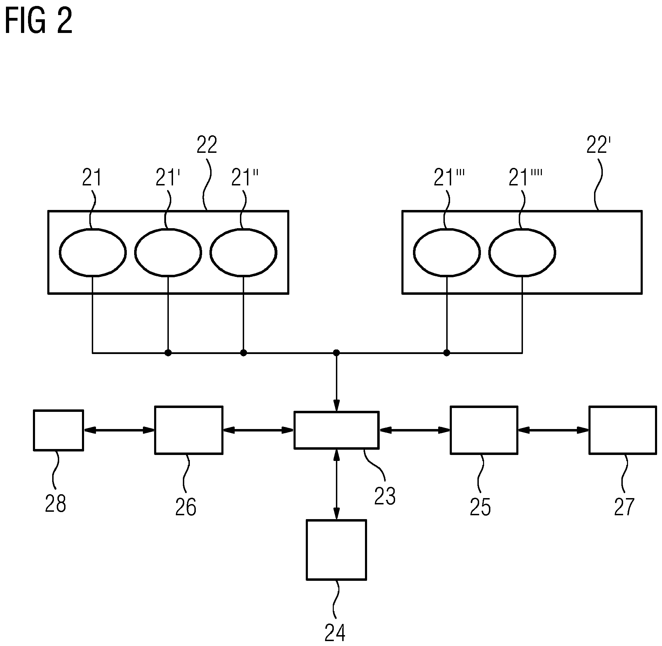

Figure 2 shows a scheme of the inventive method. Herein, the sensor data 21, 21', 21", 21''', 21'''' being collected by multiple sensors being placed in two continuous flow engines 22, 22' are collected by the data processing unit 23 of the inventive system. The data processing unit further executes a retrieval of historic data 25 and a retrieval of simulation data 26 via connection to a historic database and a simulation unit. Said historic database is furthermore able to perform a historic data retrieval 27 from a remote database 27. This allows to gain additional data to be utilized during evaluation processes. Furthermore, the simulation unit is able to perform a simulation data retrieval 28 from a remote database. This allows to keep the simulation models updated and improve the overall reliability. Also, this allows to make best use of the experience of a remotely located group being in this case a third party company being tasked with performing maintenance on the continuous flow engines.

The processing unit 23 executes the inventive method as described herein also utilizing additional processing power being available in the industrial plant like processing power of processors specifically adapted for simulating models of the filters. This allows to provide a significantly improved overall capability of the system as shown forwarding a significantly enriched and personalized output to a user interface to be reviewed by an operator 24 on an user interface. Corresponding processes have already been exemplarily described with regard to figure 1.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Method of controlling a continuous flow engine (2, 22, 22'),
wherein the method contains the step of evaluating a current state of at least one filter (1, 1', 1") utilized in the continuous flow engine (2, 22, 22'),
wherein the method contains the step of utilizing the current state to determine when a performance loss of the continuous flow engine (2, 22, 22') based on the at least one filter (1, 1', 1"),
wherein the method contains the step of evaluating a benefit of servicing and/or replacing the at least one filter (1, 1', 1'') taking into account associated losses.

2. Method according to claim 1, wherein at least one of the at least one filter (1, 1', 1") is located in an air intake system, a fuel supply stream and/or a hydraulic liquid stream.

3. Method according to any of claims 1 to 2, wherein the benefit of servicing and/or replacing the at least one filter (1, 1', 1") it utilized to create a maintenance indicator.

4. Method according to any of claims 1 to 3, wherein the benefit of servicing and/or replacing the at least one filter (1, 1', 1") it utilized to create a maintenance indicator, wherein the maintenance indicator is a numerical value,
wherein the method contains a step of monitoring the change of the numerical value over time,
wherein the method contains a step of triggering a security action in case the change of the numerical value over time deviates from an expected behavior.

5. Method according to any of claims 1 to 4, wherein the method contains the step of providing a output to an operator (24) of the continuous flow engine (2, 22, 22'),
wherein the output contains data with regard to the benefit of replacing the at least one filter (1, 1', 1") at the specific time.

6. Method according to any of claims 1 to 5, wherein the method contains the step of sending a request to a computer program product utilized to execute the method,
wherein the request optionally contains a specified time and/or a specified performance,
wherein the method contains the step of sending a output to an operator (24) of the continuous flow engine (2, 22, 22') containing data with regard to the benefit of servicing and/or replacing the at least one filter (1, 1', 1"), wherein the data optionally takes into account the specified time and/or the specified performance.

7. Method according to any of claims 1 to 6, wherein the method utilizes at least one sensor adapted to monitor the current state of the at least one filter (1, 1', 1").

8. Method according to any of claims 1 to 7, wherein the method contains the step of retrieving data from a historic database (5),
wherein the historic database (5) contains data with regard to different states of a filter (1, 1', 1") as to be evaluated and/or a filter (1, 1', 1") being comparable to the filter (1, 1', 1") to be evaluated and associated performances of a continuous flow engine (2, 22, 22'),
wherein the step of determining the performance loss of the continuous flow engine (2, 22, 22') and/or the step of evaluating the benefit of servicing and/or replacing the at least one filter (1, 1', 1") at least takes into account the data retrieved from the historic database (5).

9. Method according to any of claims 1 to 8, wherein the method contains the step of retrieving data from a component database,
wherein the component database contains filter (1, 1', 1") data,
wherein the filter (1, 1', 1") data contains data regarding technical characteristics and/or commercial characteristics, preferably commercial characteristics, of the at least one filter (1, 1', 1"),
wherein the filter (1, 1', 1") data is utilized to evaluated the benefit of servicing and/or replacing the at least one filter (1, 1', 1").

10. Method according to any of claims 1 to 9, wherein the method contains the step of retrieving data from a historic database (5),
wherein the historic database (5) contains data with regard to different states of a filter (1, 1', 1") as to be evaluated and/or a filter (1, 1', 1") being comparable to the filter (1, 1', 1") to be evaluated and at least one correlated characteristic of a continuous flow engine (2, 22, 22'),
wherein the method contains the step of acquiring data with regard to the current state of the at least one filter (1, 1', 1") and at least one correlated characteristic of a continuous flow engine (2, 22, 22'),
wherein the acquired data of the current state of the filter (1, 1', 1") and the at least one correlated characteristic of a continuous flow engine (2, 22, 22') are compared to corresponding data contained in the historic database (5), wherein in case the data of the at least one correlated characteristic of a continuous flow engine (2, 22, 22') does not meet the expected data based on the data contained in the historic database (5) taking into account the correlated data with regard to the current state of the filter (1, 1', 1") an action is triggered.

11. Method according to any of claims 1 to 10, wherein the method contains the step of collecting a plurality of current states of the at least one filter (1, 1', 1") over a period of at least three days,
wherein the collected plurality of current states are utilized to monitor the at least one filter (1, 1', 1").

12. Method according to any of claims 1 to 11, wherein the method contains the step of suggesting a change of the at least one filter (1, 1', 1") to a different filter (1, 1', 1") type based on the data collected.

13. A system (3) adapted to be utilized in a method according to any of claims 1 to 12 comprising a processor and a non-transitory computer readable medium comprising computer executable instructions that when executed by the processor cause the system (3) to perform operations comprising:
receiving data from a sensor directly or indirectly indicating the current state of the at least one filter (1, 1', 1") utilized in a continuous flow engine (2, 22, 22'),
evaluating a current state of at least one filter (1, 1', 1'') utilized in the continuous flow engine (2, 22, 22'), utilizing the current state to determine when a performance loss of the continuous flow engine (2, 22, 22') based on the filter (1, 1', 1"),
evaluating a benefit of servicing and/or replacing the filter (1, 1', 1") taking into account associated losses.

14. Computer program product, tangibly embodied in a machine-readable storage medium, including instructions operable to cause a computing entity to execute a method according to any of claims 1 to 12.

15. Use of a method according to any of claims 1 to 12, a system (3) according to claim 13, or a computer program product according to claim 14 to provide data indicating the benefit of servicing and/or placing the filter (1, 1', 1") in the continuous flow engine (2, 22, 22').
